# EUROPEAN PATENT APPLICATION

(11) **EP 4 622 213 A2**
(43) Date of publication of application: **24.09.2025**
(21) Application number: 23909998.9
(22) Date of filing: 05.12.2023
(51) Int. Cl.: H04L 47/12

(54) **MESSAGE TRANSMISSION METHOD AND SYSTEM, AND NETWORK APPARATUS**

(30) Priority: 29.12.2022 CN 202211709051
(71) Applicant: Huawei Technologies Co., Ltd., Shenzhen, Guangdong 518129 (CN)
(72) Inventor: CHENG, Chuanning, Shenzhen, Guangdong 518129 (CN); CHENG, Zhongwu, Shenzhen, Guangdong 518129 (CN); QU, Xiangfeng, Shenzhen, Guangdong 518129 (CN); LI, Bing, Shenzhen, Guangdong 518129 (CN); HAN, Zhaojiao, Shenzhen, Guangdong 518129 (CN); DAI, Jiwu, Shenzhen, Guangdong 518129 (CN)
(74) Representative: Huawei European IPR
(86) International application number: PCT/CN2023/136564
(87) International publication number: WO 2024/140068

(57) **Abstract**

This application provides a packet transmission method and system, and a network apparatus. The method is applied to a transmitter. At least one port of the transmitter separately establishes a transmission path with one port of a receiver via a plane network. The method includes: when there are a plurality of transmission paths, determining a target port of a packet task in at least one first packet task based on network traffic of each transmission path, where the target port of the packet task belongs to ports respectively connected to the plurality of transmission paths at the transmitter, and the at least one first packet task belongs to a same transmission task; generating a first packet corresponding to the packet task; and sending the first packet corresponding to the packet task to the receiver through a transmission path of the target port of the packet task. In this application, receiving and sending resources can be shared between different transmission paths with a same destination, and network bandwidth utilization of the transmitter and the receiver can be effectively improved.

## Description

This application claims priority to Chinese Patent Application No. 202211709051.2, filed with the China National Intellectual Property Administration on December 29, 2022 and entitled "PACKET TRANSMISSION METHOD AND SYSTEM, AND NETWORK APPARATUS", which is incorporated herein by reference in its entirety.

### TECHNICAL FIELD

This application relates to the field of communication technologies, and in particular, to a packet transmission method and system, and a network apparatus.

### BACKGROUND

With development of artificial intelligence (Artificial Intelligence, Al), cloud computing, big data, and internet technologies, a requirement for a computing or storage capability or the like of a node is increasingly high. Currently, a plurality of nodes are interconnected via a network to form a node cluster, to provide a high overall computing or storage capability. However, more interconnected nodes require a higher overall network bandwidth and a higher network bandwidth of a single node.

In a related technology, a transmission bandwidth of a node is increased by increasing a quantity of ports (physical ports) of the node, to increase an overall network bandwidth. A node accesses a network through a plurality of ports, to communicate with another node through a plurality of transmission paths, thereby increasing a transmission bandwidth.

However, in the related technology, transmission resources of the plurality of transmission paths are independent of each other, resulting in low bandwidth utilization.

### SUMMARY

This application provides a packet transmission method and system, and a network apparatus, to resolve low bandwidth utilization in a packet transmission process in a related technology. In this way, receiving and sending resources can be shared between different transmission paths with a same destination, and network bandwidth utilization of a transmitter and a receiver can be effectively improved.

According to a first aspect, this application provides a packet transmission method, applied to a transmitter. At least one port of the transmitter separately establishes a transmission path with one port of a receiver via a plane network. The method includes: when there are a plurality of transmission paths, determining a target port of a packet task in at least one first packet task based on network traffic of each transmission path, where the target port of the packet task belongs to ports respectively connected to the plurality of transmission paths at the transmitter, and the at least one first packet task belongs to a same transmission task; generating a first packet corresponding to the packet task; and sending the first packet corresponding to the packet task to the receiver through a transmission path of the target port of the packet task.

A length of the first packet may be determined based on an actual transmission task. The length of the first packet is not limited in embodiments of this application.

For the network traffic of each transmission path, in an example, the transmitter may actively obtain the network traffic of each transmission path. For example, the transmitter may send a traffic query packet to the receiver or a switching apparatus, and the receiver or the switching apparatus feeds back a response packet of the traffic query packet to the transmitter. The response packet carries network traffic of a transmission path through which the traffic query packet passes.

In another example, the transmitter may passively obtain the network traffic of each transmission path. For example, a packet corresponding to a packet task sent by the transmitter may include a network congestion flag field. If network congestion exists on a transmission path of the packet, the switching apparatus marks, in the network congestion flag field, that network congestion exists on the current transmission path. After receiving the packet, the receiver feeds back a response packet to the transmitter based on the mark in the network congestion flag field. The response packet indicates that network congestion exists on the transmission path of the packet.

Beneficial effect of the method is as follows: The transmitter adjusts a transmission path of the first packet based on the network traffic of each transmission path, so that a transmission path of each first packet can be adaptively and dynamically allocated based on the network traffic. In this way, receiving and sending resources are shared between different transmission paths with a same destination, and network bandwidth utilization of the transmitter and the receiver is effectively improved. In addition, a packet is allocated based on the network traffic of the transmission path, to effectively prevent the first packet from being allocated to a transmission path on which network congestion occurs, and implement network traffic adjustment on the plurality of transmission paths. This implements network balancing of the plurality of transmission paths between the transmitter and the receiver, and improves overall network stability.

In a possible implementation, the method further includes: determining a first port of the transmitter and a second port of the receiver, where the first port and the second port are capable of communicating with each other and no transmission path is established between the first port and the second port; and establishing a connection to the second port through the first port, to obtain a transmission path between the first port and the second port.

In a possible implementation, determining the first port of the transmitter and the second port of the receiver includes: determining a first communication port of the transmitter and a second communication port of the receiver according to a port identifier list of the receiver, where the first communication port includes a port that is in a plurality of ports of the transmitter and that is capable of communicating with the receiver, the second communication port includes a port that is in a plurality of ports of the receiver and that is capable of communicating with the transmitter, and the port identifier list includes an identifier of each port of the receiver; and determining the first port from the first communication port and determining the second port from the second communication port according to a port mapping table of the transmitter, where the port mapping table records a current transmission path between the transmitter and the receiver; and the method further includes: adding the transmission path between the second port and the first port to the port mapping table of the transmitter.

For different network routing modes, port identifiers and port mapping tables are different. For example, for an internet protocol (Internet Protocol, IP) network routing mode, the port identifier may be an IP address, and correspondingly, the port mapping table may be an IP mapping table. For an identity document (identity document, ID) network routing mode, the port identifier may be an ID address, and the port mapping table may be an ID mapping table.

In a possible implementation, the method further includes: determining whether a to-be-retransmitted packet task exists in the at least one first packet task; when the to-be-retransmitted packet task exists and there are the plurality of transmission paths, determining a target port of the to-be-retransmitted packet task based on the network traffic of each transmission path, where the target port of the to-be-retransmitted packet task belongs to the ports respectively connected to the plurality of transmission paths at the transmitter; generating a second packet corresponding to the to-be-retransmitted packet task; and sending the second packet to the receiver through a transmission path of the target port of the to-be-retransmitted packet task.

In a related technology, after a packet is lost in a transmitted subflow, the packet is retransmitted through an original path. If the packet is lost on the original path due to a fault like network congestion, the retransmitted packet may continue to be lost. However, in this embodiment of this application, after the second packet is generated, a transmission path of the second packet is reselected. This reduces a loss probability of the second packet, effectively implements integrity transmission of the packet, and reduces a transmission delay of the second packet.

In a first example, the transmitter retransmits the first packet according to a timeout retransmission mechanism. In a second example, the transmitter retransmits the packet according to a combination of a fast retransmission mechanism and a selective acknowledgment (Selective Acknowledgment, SACK) mechanism.

In a possible implementation, the method further includes: receiving an information packet sent by the receiver, where the information packet carries receiving status information, and the receiving status information indicates the first packet that has been received by the receiver; and determining, based on the information packet, whether the transmission task is completed.

In a possible implementation, the method further includes: determining a to-be-disconnected path based on the network traffic of each transmission path, where the to-be-disconnected path is separately connected to a third port and a fourth port at the transmitter and the receiver; and disconnecting from the fourth port through the third port.

Alternatively, the transmitter may determine the to-be-disconnected path based on a packet loss status of each transmission path. After actively disconnecting the transmission path between the third port and the fourth port, the transmitter or the receiver may further delete the transmission path between the third port and the fourth port from a respective port mapping table. It should be noted that, after a transmission path is disconnected, a packet that is previously allocated to the transmission path but has not been successfully transmitted may be transmitted through another transmission path.

In the related technology, a bandwidth of a network apparatus (including a transmitter and a receiver) is increased to improve an overall network bandwidth. The network apparatus in the related technology includes a controller and a physical interface connected to the controller. When the bandwidth of the network apparatus is increased, a transmission bandwidth of the physical interface needs to be increased to meet a network bandwidth requirement of the controller. However, compared with an increase multiple of the network bandwidth requirement, the physical interface increases slowly, and cannot match an increase of the network bandwidth requirement. Consequently, a network bandwidth increase of a single network apparatus is limited.

However, in this embodiment of this application, a port mapping table technology is used to support a user in dynamically adding or deleting a transmission path at a software layer, adding a transmission path when a network bandwidth requirement increases, and disconnecting a part of transmission paths when the network bandwidth requirement decreases, so that network bandwidth expansion or reduction can be implemented without changing a network structure. In addition, each port in a single network apparatus is connected to one physical interface, so that a network bandwidth requirement of a single physical interface is reduced, and a network bandwidth increase of the single network apparatus is no longer limited by a port bandwidth and a physical interface bandwidth. Compared with the related technology, this embodiment of this application effectively increases a network bandwidth capability of the single network apparatus, and improves network construction flexibility.

According to a second aspect, this application provides a packet transmission method, applied to a receiver. At least one port of the receiver separately establishes a transmission path with one port of a transmitter via a plane network. The method includes: receiving at least one first packet sent by the transmitter, where the at least one first packet belongs to a same transmission task; and performing a processing operation based on the first packet and recording transmission information of the first packet, where the transmission information of the packet indicates an identifier of the packet.

The receiver may extract data information and the transmission information that are carried in the first packet, then perform a processing operation based on the data information, and record the transmission information. The data information includes an operation type, and optionally, may further include data required for the processing operation. The operation type may include a migration operation like read or write, and at-most-once semantics (at-most-once semantics) operation.

In a possible implementation, the method further includes: establishing a connection to a second port of the transmitter through a first port of the receiver, to obtain a transmission path between the first port and the second port, where the first port and the second port are capable of communicating with each other; and adding the transmission path between the first port and the second port to a port mapping table of the receiver.

In a possible implementation, the method further includes: receiving a second packet sent by the transmitter, where the second packet is used to implement at-most-once semantics; determining whether the second packet is a duplicate packet of any first packet; and when the second packet is not the duplicate packet of the any first packet, performing a processing operation based on the second packet and recording transmission information of the second packet; or when the second packet is the duplicate packet of the any first packet, skipping performing the processing operation based on the second packet.

The receiver may determine, based on transmission information of the second packet, whether the second packet is the duplicate packet of the any first packet. The receiver maintains a transmission entry, and the receiver may determine whether the transmission entry records transmission information of the second packet to further determine whether the second packet is the duplicate packet of the any first packet.

In a related technology, transmission of a packet used to implement at-most-once semantics is not supported. However, in this embodiment of this application, for the second packet used to implement the at-most-once semantics, when the second packet is a packet repeatedly received by the receiver, a processing operation is not performed based on the second packet. This effectively supports the transmission of the packet used to implement at-most-once semantics.

In a possible implementation, the method further includes: when the second packet is the duplicate packet of the any first packet, sending a response packet of the second packet to the transmitter.

Optionally, if the second packet is used to request to return response data to the transmitter, the response packet sent by the receiver further needs to carry the response data. The response data may include original data corresponding to a processing operation performed based on the any first packet, that is, data on which no processing operation is performed based on the any first packet.

In a possible implementation, the method further includes: when a sending condition is met, sending an information packet to the transmitter through the transmission path, where the information packet carries receiving status information, and the receiving status information indicates the first packet that has been received by the receiver.

In a possible implementation, the method further includes: determining a to-be-disconnected path based on network traffic of each transmission path, where the to-be-disconnected path is separately connected to a third port and a fourth port at the transmitter and the receiver; and disconnecting from the third port through the fourth port.

According to a third aspect, this application provides a network apparatus, used in a transmitter. The apparatus includes: a controller, a plurality of agents connected to the controller, and a plurality of ports, where the plurality of agents are connected to the plurality of ports in one-to-one correspondence, and at least one of the plurality of ports separately establishes a transmission path with a receiver via a plane network, where the controller is configured to: when there are a plurality of transmission paths, determine a target port of a packet task in at least one first packet task based on network traffic of each transmission path, where the target port of the packet task belongs to ports respectively connected to the plurality of transmission paths at the transmitter, and the at least one first packet task belongs to a same transmission task; the controller is further configured to send the packet task to an agent connected to the target port of the packet task; and the agent is configured to: generate a first packet corresponding to the received packet task, and send the generated first packet to the receiver through a transmission path of the connected port.

In a possible implementation, the apparatus further includes: a plurality of physical interfaces connected to the plurality of agents in one-to-one correspondence, where the plurality of physical interfaces are connected to the plurality of ports in one-to-one correspondence; the agent is specifically configured to send the generated first packet to a connected physical interface; and the physical interface is configured to: perform parallel-to-serial conversion on the received first packet, and send the converted first packet to the receiver through the transmission path of the connected port.

In a related technology, an overall network bandwidth is increased by increasing a network bandwidth of a switching apparatus. A manner of increasing the network bandwidth of the switching apparatus includes: increasing a quantity of switching apparatuses and increasing a quantity of ports of the switching apparatus. Consequently, when the overall network bandwidth is increased, the quantity of switching apparatus is increased, resulting in high network topology structure costs.

However, in this embodiment of this application, each port in a single network apparatus is connected to one physical interface, so that a quantity of used switching apparatuses can be reduced. Compared with the related technology, this embodiment of this application reduces the network topology structure costs, can increase a network bandwidth in a large range, and has high scalability.

In a possible implementation, the controller is further configured to determine whether a to-be-retransmitted packet task exists in the at least one first packet task; the controller is further configured to: when the to-be-retransmitted packet task exists and there are the plurality of transmission paths, determine a target port of the to-be-retransmitted packet task based on the network traffic of each transmission path, where the target port of the to-be-retransmitted packet task belongs to the ports respectively connected to the plurality of transmission paths at the transmitter; the controller is further configured to send the to-be-retransmitted packet task to an agent corresponding to the target port of the to-be-retransmitted packet task; and the agent is further configured to: generate a second packet corresponding to the received to-be-retransmitted packet task, and send the generated second packet to the receiver through a transmission path of a connected port.

In a possible implementation, the agent is further configured to: receive an information packet sent by the receiver, and send the information packet to the controller, where the information packet indicates the first packet that has been received by the receiver; and the controller is further configured to determine, based on the information packet, whether the transmission task is completed.

According to a fourth aspect, this application provides a network apparatus, used in a receiver. The apparatus includes: a controller, a plurality of agents connected to the controller, and a plurality of ports, where the plurality of agents are connected to the plurality of ports in one-to-one correspondence, and at least one of the plurality of ports separately establishes a transmission path with a transmitter via a plane network; the agent is configured to receive at least one first packet sent by the transmitter, where the at least one first packet belongs to a same transmission task; the agent is further configured to: when the first packet is not used to implement at-most-once semantics, perform a processing operation based on the first packet and extract transmission information of the first packet, where the transmission information indicates an identifier of the packet; or when the first packet is used to implement the at-most-once semantics, send the first packet to the controller; and the controller is configured to record the received transmission information, or perform a processing operation based on the received first packet and record the transmission information of the first packet.

In a possible implementation, the apparatus further includes: a plurality of physical interfaces connected to the plurality of agents in one-to-one correspondence, where the plurality of physical interfaces are connected to the plurality of ports in one-to-one correspondence; the physical interface is configured to: receive the first packet, and perform serial-to-parallel conversion on the first packet; the physical interface is further configured to send the converted first packet to a connected agent; and the agent is specifically configured to receive the converted first packet sent by the connected physical interface.

In a possible implementation, the agent is further configured to: receive a second packet sent by the transmitter, and send the second packet to the controller, where the second packet is used to implement at-most-once semantics; and the controller is configured to: determine whether the second packet is a duplicate packet of any first packet; and when the second packet is not the duplicate packet of the any first packet, perform a processing operation based on the second packet and record transmission information of the second packet; or when the second packet is the duplicate packet of the any first packet, skip performing the processing operation based on the second packet.

In a possible implementation, the controller is further configured to: when the second packet is the duplicate packet of the any first packet, determine a first available port in the at least one port; the controller is further configured to send response information of the second packet to an agent connected to the first available port; and the agent is configured to: generate a response packet based on the response information, and send the response packet to the transmitter through a transmission path of a connected port.

In a possible implementation, the controller is further configured to determine a second available port in the at least one port when determining that a sending condition is met; the controller is further configured to send receiving status information to an agent connected to the second available port, where the receiving status information indicates a first packet that belongs to the transmission task and that has been received by the receiver; and the agent is configured to: generate an information packet based on the receiving status information, and send the information packet to the transmitter through a transmission path of a connected port.

According to a fifth aspect, this application provides a network apparatus, used in a transmitter. At least one port of the transmitter separately establishes a transmission path with one port of a receiver via a plane network. The network apparatus includes a processing module, configured to: when there are a plurality of transmission paths, determine a target port of a packet task in at least one first packet task based on network traffic of each transmission path, where the target port of the packet task belongs to ports respectively connected to the plurality of transmission paths at the transmitter, and the at least one first packet task belongs to a same transmission task, where the processing module is further configured to generate a first packet corresponding to the packet task; and a transceiver module, configured to send the first packet corresponding to the packet task to the receiver through a transmission path of the target port of the packet task.

In a possible implementation, the processing module is further configured to determine a first port of the transmitter and a second port of the receiver, where the first port and the second port are capable of communicating with each other and no transmission path is established between the first port and the second port. The transceiver module is further configured to establish a connection to the second port through the first port, to obtain a transmission path between the first port and the second port.

In a possible implementation, the processing module is specifically configured to: determine a first communication port of the transmitter and a second communication port of the receiver according to a port identifier list of the receiver, where the first communication port includes a port that is in a plurality of ports of the transmitter and that is capable of communicating with the receiver, the second communication port includes a port that is in a plurality of ports of the receiver and that is capable of communicating with the transmitter, and the port identifier list includes an identifier of each port of the receiver; determine the first port from the first communication port and determine the second port from the second communication port according to a port mapping table of the transmitter, where the port mapping table records a current transmission path between the transmitter and the receiver; and add the transmission path between the second port and the first port to the port mapping table of the transmitter.

In a possible implementation, the processing module is further configured to determine whether a to-be-retransmitted packet task exists in the at least one first packet task. The processing module is further configured to: when the to-be-retransmitted packet task exists and there are the plurality of transmission paths, determine a target port of the to-be-retransmitted packet task based on the network traffic of each transmission path, where the target port of the to-be-retransmitted packet task belongs to the ports respectively connected to the plurality of transmission paths at the transmitter. The processing module is further configured to generate a second packet corresponding to the to-be-retransmitted packet task. The transceiver module is further configured to send the second packet to the receiver through a transmission path of the target port of the to-be-retransmitted packet task.

In a possible implementation, the transceiver module is further configured to receive an information packet sent by the receiver, where the information packet carries receiving status information, and the receiving status information indicates the first packet that has been received by the receiver. The processing module is further configured to determine, based on the information packet, whether the transmission task is completed.

In a possible implementation, the processing module is further configured to determine a to-be-disconnected path based on the network traffic of each transmission path, where the to-be-disconnected path is separately connected to a third port and a fourth port at the transmitter and the receiver. The transceiver module is further configured to disconnect from the fourth port through the third port.

According to a sixth aspect, this application provides a network apparatus, used in a receiver. At least one port of the receiver separately establishes a transmission path with one port of a transmitter via a plane network. The network apparatus includes: a transceiver module, configured to receive at least one first packet sent by the transmitter, where the at least one first packet belongs to a same transmission task; and a processing module, configured to perform a processing operation based on the first packet and recording transmission information of the first packet, where the transmission information of the packet indicates an identifier of the packet.

In a possible implementation, the transceiver module is further configured to establish a connection to a second port of the transmitter through a first port of the receiver, to obtain a transmission path between the first port and the second port, where the first port and the second port are capable of communicating with each other. The processing module is further configured to add the transmission path between the first port and the second port to a port mapping table of the receiver.

In a possible implementation, the transceiver module is further configured to receive a second packet sent by the transmitter, where the second packet is used to implement at-most-once semantics. The processing module is further configured to determine whether the second packet is a duplicate packet of any first packet. The processing module is further configured to: when the second packet is not the duplicate packet of the any first packet, perform a processing operation based on the second packet and record transmission information of the second packet; or the processing module is further configured to: when the second packet is the duplicate packet of the any first packet, skip performing the processing operation based on the second packet.

In a possible implementation, the transceiver module is further configured to: when the second packet is the duplicate packet of the any first packet, send a response packet of the second packet to the transmitter.

In a possible implementation, the transceiver module is further configured to: when a sending condition is met, send an information packet to the transmitter through the transmission path, where the information packet carries receiving status information, and the receiving status information indicates the first packet that has been received by the receiver.

In a possible implementation, the processing module is further configured to determine a to-be-disconnected path based on network traffic of each transmission path, where the to-be-disconnected path is separately connected to a third port and a fourth port at the transmitter and the receiver. The transceiver module is further configured to disconnect from the third port through the fourth port.

According to a seventh aspect, this application provides a network apparatus. The apparatus includes one or more processors; and a memory, configured to store one or more computer programs or instructions. When the one or more computer programs or instructions are executed by the one or more processors, the one or more processors are enabled to implement the method according to the first aspect.

According to an eighth aspect, this application provides a network apparatus. The apparatus includes one or more processors; and a memory, configured to store one or more computer programs or instructions. When the one or more computer programs or instructions are executed by the one or more processors, the one or more processors are enabled to implement the method according to the second aspect.

According to a ninth aspect, this application provides a network apparatus, including a processor, configured to perform the method according to the first aspect.

According to a tenth aspect, this application provides a network apparatus, including a processor, configured to perform the method according to the second aspect.

According to an eleventh aspect, this application provides a packet transmission system. The system includes a transmitter and a receiver. The transmitter includes the network apparatus according to any one of the third aspect, the fifth aspect, the seventh aspect, and the ninth aspect. The receiver includes the network apparatus according to any one of the fourth aspect, the sixth aspect, the eighth aspect, and the tenth aspect.

According to a twelfth aspect, this application provides a computer-readable storage medium, including a computer program or instructions. When the computer program or the instructions are executed on a computer, the computer is enabled to perform the method according to any one of the first aspect and the second aspect.

According to a thirteenth aspect, this application provides a chip, including an input interface, an output interface, and at least one processor. Optionally, the chip further includes a memory. The at least one processor is configured to execute code in the memory, and when the at least one processor executes the code, the chip implements the method according to any one of the first aspect and the second aspect.

Optionally, the chip may be an integrated circuit.

According to a fourteenth aspect, this application provides a computer program product including instructions. When the computer program product runs on a computer, the computer is enabled to implement the method according to any one of the first aspect and the second aspect.

### BRIEF DESCRIPTION OF DRAWINGS

FIG. 1 is a diagram of a structure of a packet transmission system according to an embodiment of this application;
FIG. 2 is a diagram of a port of a network apparatus according to an embodiment of this application;
FIG. 3 is a diagram of a port of another network apparatus according to an embodiment of this application;
FIG. 4 is a diagram of a port of still another network apparatus according to an embodiment of this application;
FIG. 5 is a diagram of a structure of a network apparatus according to an embodiment of this application;
FIG. 6 is a diagram of a process of adding a transmission path according to an embodiment of this application;
FIG. 7 is a schematic flowchart of a packet transmission method according to an embodiment of this application;
FIG. 8 is a schematic flowchart of another packet transmission method according to an embodiment of this application;
FIG. 9A and FIG. 9B are a schematic flowchart of still another packet transmission method according to an embodiment of this application;
FIG. 10 is a diagram of a packet transmission process according to an embodiment of this application;
FIG. 11 is a block diagram of a network apparatus according to an embodiment of this application;
FIG. 12 is a diagram of a structure of an electronic device according to an embodiment of this application; and
FIG. 13 is a diagram of a structure of a network apparatus according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In computing and storage facilities such as a data center, a cloud computing center, and a high-performance computing (High-Performance Computing, HPC) center, a plurality of nodes (including a computing node and a storage node) are interconnected via a network to form computing resources and storage resources such as a computing resource pool, a storage resource pool, or an HPC resource pool. However, more interconnected nodes require a higher overall network bandwidth, and a corresponding higher network bandwidth of a single node.

In addition, currently, a scale-out (Scale-out) manner is used to improve a computing or storage capability. In the scale-out manner, traffic is distributed in a distributed computing manner, to reduce a computing amount or a storage amount of a single node. However, in a distributed computing process, an amount of intermediate data continuously increases. For the computing facility, an amount of data transmitted between computing nodes increases, and an overall network bandwidth requirement increases accordingly. For the storage facility, an amount of data that needs to be stored by a storage node increases, and an access bandwidth requirement of a computing node for the storage node also increases accordingly.

Currently, in an NVLink technology, a transmission bandwidth of a node is increased by increasing a quantity of ports of the node, to increase an overall network bandwidth. The NVLink is an interconnection technology used between a graphics processing unit (graphics processing unit, GPU) and a GPU. The GPU includes a plurality of NVLink modules. In a scenario in which two GPUs are interconnected, a plurality of NVLink channels are established between the two GPUs through a plurality of NVLink modules of each of the two GPUs. One GPU may access storage space of the other GPU through the plurality of NVLink channels In a scenario in which a plurality of GPUs are interconnected, each GPU may be connected to a plurality of NV switches (Switches) through a plurality of NVLink modules, and one GPU may access storage space of all the other GPUs through connected NV switches.

In the NVLink technology, when transmitting a packet, a GPU selects an NVLink module based on an address of storage space to be accessed by the packet, and sends the packet through the NVLink module. However, transmission resources of a plurality of NVLink modules are independent of each other. As a result, packets accessing same or similar storage space are sent through a same NVLink module, resulting in low bandwidth utilization of a node.

In addition, in the scenario in which the plurality of GPUs are interconnected, the NV switch performs routing based on a memory address carried in a packet. Unified address coding needs to be performed on the plurality of interconnected GPUs, in other words, storage space of the plurality of GPUs needs to share one address space, and the address space is limited in scale. Consequently, a quantity of interconnected GPUs is limited, and overall improvement of a network bandwidth is limited.

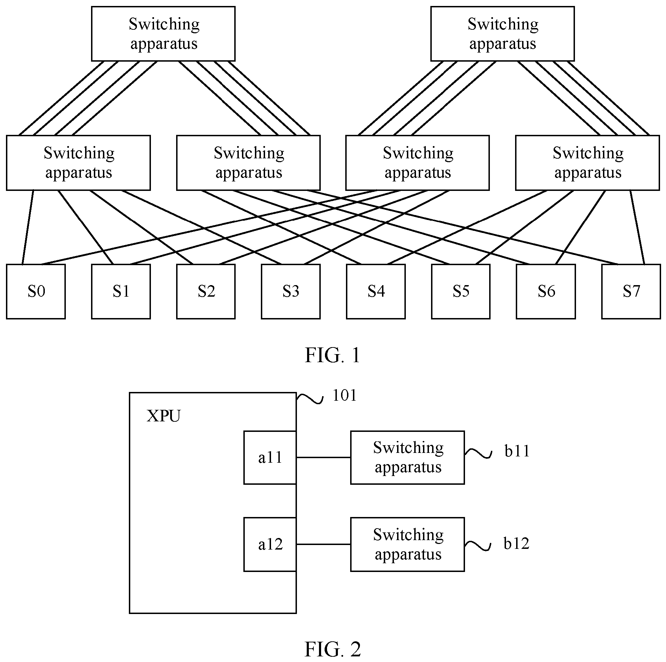

An embodiment of this application provides a packet transmission method, which may be applied to the foregoing data center, cloud computing center, HPC center, and the like. The method may be performed by a packet transmission system. FIG. 1 is a diagram of a structure of a packet transmission system according to an embodiment of this application. The system includes eight network apparatuses (also referred to as end nodes) S0 to S7 and two plane networks. Each plane network includes three switching apparatuses, and the network apparatus is equivalent to the foregoing computing node or storage node. When a packet is transmitted between any two network apparatuses, a network apparatus configured to send the packet is referred to as a transmitter, and a network apparatus configured to receive the packet is referred to as a receiver. The transmitter and the receiver may be different network apparatuses, or may be a same network apparatus.

Each network apparatus separately accesses the two plane networks through two ports, and establishes two transmission paths with two ports of another network apparatus via the two plane networks. The plane networks on the two transmission paths are different. Ports connected to a same plane network have different network addresses. In the packet transmission system, if a network bandwidth requirement of one network apparatus is 400 gigabytes (Gigabyte, G), a single network apparatus needs two 200 G physical ports, and a network bandwidth of each switching apparatus needs to be 8*200 G.

A network topology structure of the packet transmission system shown in FIG. 1 is merely an example for description. The network topology structure of the packet transmission system is not limited in embodiments of this application.

The following describes distribution of ports in a network apparatus. In embodiments of this application, the ports in the network apparatus may be distributed in a same XPU, or may be distributed in different XPUs. The XPU is a general term of various processors, for example, a general term of a graphics processing unit (graphics processing unit, GPU), a central processing unit (central processing unit, CPU), a tensor processing unit (Tensor Processing Unit, TPU), a neural-network processing unit (Neural-network Processing Unit, NPU), and a data processing unit (Data Processing Unit, DPU).

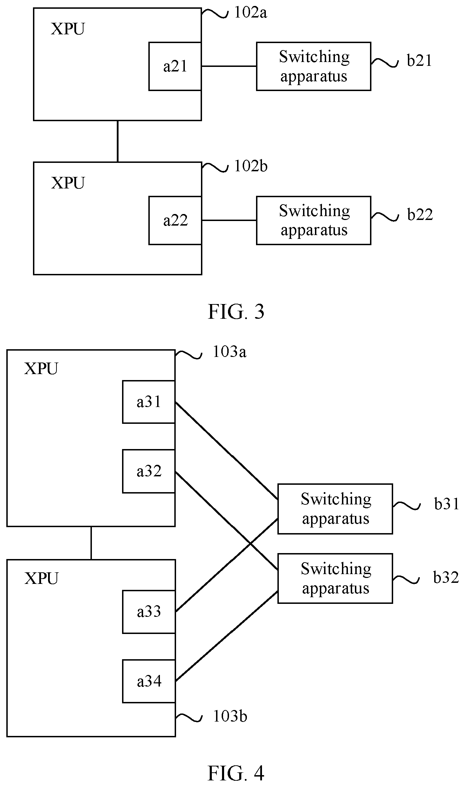

FIG. 2 to FIG. 4 are respectively diagrams of ports of network apparatuses according to embodiments of this application. FIG. 2 shows an XPU 101 of a network apparatus, where the XPU 101 includes two ports a11 and a12. The XPU 101 is connected to a switching apparatus b11 through a11, and is connected to a switching apparatus b12 through a12. FIG. 3 shows two XPUs 102a and 102b of a network apparatus that are connected through a bus, where the XPU 102a includes a port a21, the XPU 102b includes a port a22, and the two XPUs share the two ports. The XPU 102a is connected to a switching apparatus b21 through a21, and the XPU 102b is connected to a switching apparatus b22 through a22. FIG. 4 shows two XPUs 103a and 103b of a network apparatus, where the XPU 103a includes two ports a31 and a32, and the XPU 103b includes two ports a33 and a34. The XPU 103a is connected to a switching apparatus b31 through a31, and is connected to a switching apparatus b32 through a32. The XPU 103b is connected to a switching apparatus b31 through a33, and is connected to a switching apparatus b32 through a34.

In embodiments of this application, a single XPU may not only transmit a packet through a port of the XPU, but also transmit the packet through a port of another XPU. Therefore, ports between XPUs are shared, in other words, a network bandwidth between the XPUs is shared. This can increase an overall effective network bandwidth of a transmitter.

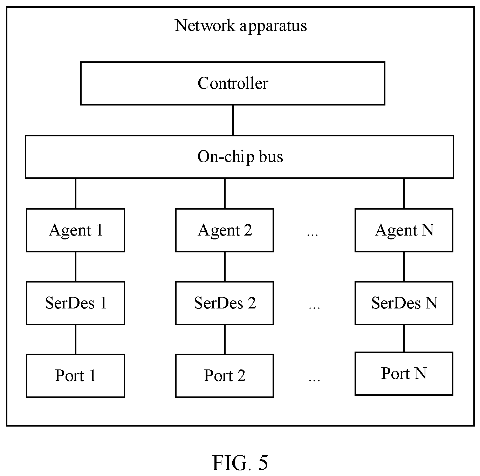

FIG. 5 is a diagram of a structure of a network apparatus according to an embodiment of this application. The network apparatus includes a controller (Controller), an on-chip bus (BUS), a plurality of agents (Agents) at a network layer that are connected to the controller, and a plurality of ports. The plurality of agents are connected to the plurality of ports in one-to-one correspondence. Optionally, the network apparatus may further include a plurality of physical interfaces connected to the plurality of agents in one-to-one correspondence, where the plurality of physical interfaces are connected to the plurality of ports in one-to-one correspondence. FIG. 5 shows N agents (agent 1 to agent N), N physical interfaces (physical interface 1 to physical interface N), and N ports (port 1 to port N). For example, the physical interface may include a serializer/deserializer (SerDes).

The controller is configured to perform distribution, order preserving, flow control, task scheduling, route selection, and the like on a received transmission task. The on-chip bus is used for forwarding between the controller and the agent. The agent is configured to: pack a transmission task delivered by the controller into a packet, and send the packet through a connected physical interface and a port; and receive a packet, feed back related information to the controller, and the like.

In a related technology, an overall network bandwidth is increased by increasing a network bandwidth of a switching apparatus. A manner of increasing the network bandwidth of the switching apparatus includes: increasing a quantity of switching apparatuses and increasing a quantity of ports of the switching apparatus. Consequently, when the overall network bandwidth is increased, the quantity of switching apparatus is increased, resulting in high network topology structure costs.

However, in embodiments of this application, each port in a single network apparatus is connected to one physical interface, so that a quantity of used switching apparatuses can be reduced. Compared with the related technology, this embodiment of this application reduces the network topology structure costs, can increase a network bandwidth in a large range, and has high scalability.

In the packet transmission method provided in embodiments of this application, a transmission path in a packet transmission system may be increased, to increase an overall network bandwidth of the system. Alternatively, an existing transmission path in the system may be disconnected. For example, when a network bandwidth requirement is low, a part of transmission paths may be disconnected, or a faulty transmission path may be disconnected. At least one of the following cases may occur on the faulty transmission path: A plurality of consecutive packets transmitted through the transmission path are lost, a plurality of packets transmitted through the transmission path within preset time are lost, and T packets in K consecutive packets transmitted through the transmission path are lost.

First, adding a transmission path between the transmitter and the receiver is used as an example for description. The transmitter may determine a first port of the transmitter and a second port of the receiver, where the first port and the second port are capable of communicating with each other and no transmission path is established between the first port and the second port. Then, a connection is established to the first port through the second port of the transmitter, to obtain a transmission path between the second port and the first port. Optionally, the transmitter and the receiver may establish the transmission path between the first port and the second port based on a socket application programming interface (Socket Application Programming Interface, Socket API) or a communication management protocol (Communication Management Protocol, CM).

When the first port and the second port are determined, each network apparatus has a port identifier list and a port mapping table. The port identifier list of the network apparatus includes an identifier corresponding to each port of the network apparatus. The port mapping table of the network apparatus records a current transmission path between the network apparatus and another network apparatus. The transmitter may first determine a first communication port of the transmitter and a second communication port of the receiver according to a port identifier list of the receiver, where the first communication port includes a port that is in a plurality of ports of the transmitter and that is capable of communicating with the receiver, and the second communication port includes a port that is in a plurality of ports of the receiver and that is capable of communicating with the transmitter. For different network routing modes, port identifiers and port mapping tables are different. For example, for an IP network routing mode, the port identifier may be an IP address, and correspondingly, the port mapping table may be an IP mapping table. For an ID network routing mode, the port identifier may be an ID address, and the port mapping table may be an ID mapping table. In the IP network routing mode, the transmitter may determine the first communication port of the transmitter and the second communication port of the receiver in a ping manner.

Then, the first port is determined from the first communication port and the second port is determined from the second communication port according to a port mapping table of the transmitter. The transmitter may determine, from the first communication port and the second communication port according to the port mapping table of the transmitter, a communication port that has no transmission path established with the peer end. Then, one first port is determined from first communication ports for which no transmission path is established, and one second port is determined from second communication ports for which no transmission path is established.

After establishing the transmission path between the first port and the second port, the transmitter may further add the transmission path between the first port and the second port to the port mapping table of the transmitter. Correspondingly, the receiver may add the transmission path between the second port and the first port to a port mapping table of the receiver.

A process of disconnecting any transmission path is an inverse operation of a process of adding a transmission path. An example in which one transmission path between the transmitter and the receiver is disconnected is used for description. The transmitter or the receiver may determine a to-be-disconnected path based on network traffic of a transmission path of each port, or determine the to-be-disconnected path based on a packet loss status of each transmission path. The to-be-disconnected path is separately connected to a third port and a fourth port at the transmitter and the receiver. Then, the transmitter is disconnected from the fourth port through the third port, or the receiver is disconnected from the third port through the fourth port.

When the transmitter actively disconnects a transmission path between the third port and the fourth port, the transmitter no longer sends a packet through the transmission path. In this case, a timeout mechanism may exist at a software layer. When the receiver does not receive, within preset time, a packet transmitted through the transmission path, the receiver actively disconnects the transmission path.

When the receiver actively disconnects the transmission path between the fourth port and the third port, a packet transmitted through the transmission path is no longer processed. After sending a packet through the transmission path, if the transmitter does not receive a response to the packet from the receiver within preset time, the transmitter actively disconnects the transmission path.

After actively disconnecting the transmission path between the third port and the fourth port, the transmitter or the receiver may further delete the transmission path between the third port and the fourth port from the respective port mapping table.

It should be noted that, after a transmission path is disconnected, a packet that is previously allocated to the transmission path but has not been successfully transmitted may be transmitted through another transmission path.

The first port to the fourth port are merely examples for description. The first port may be the same as or different from the third port, and the second port may also be the same as or different from the fourth port. This is not limited in embodiments of this application.

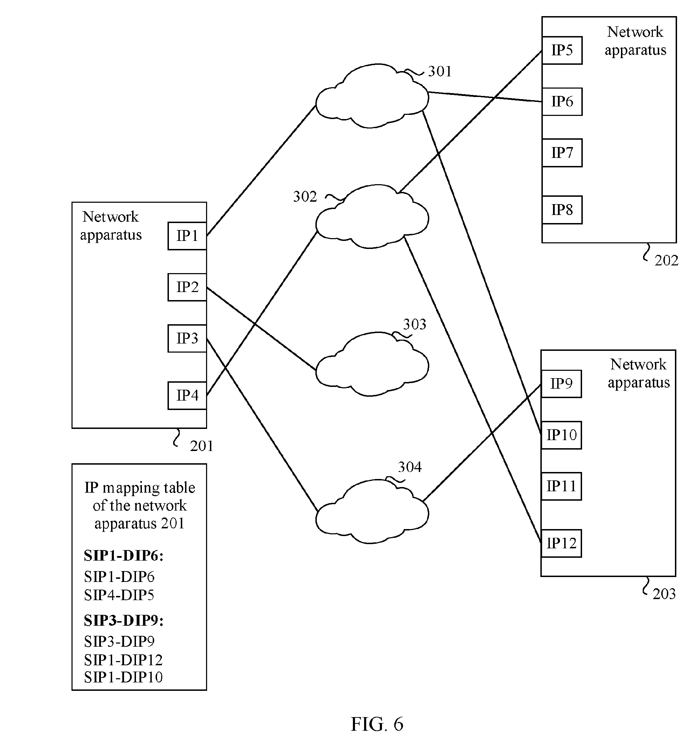

FIG. 6 is a diagram of a process of adding a transmission path according to an embodiment of this application. In FIG. 6, an example in which a port identifier is an IP address and a port mapping table is an IP mapping table is used for description. FIG. 6 shows a packet transmission system. The packet transmission system includes three network apparatuses 201 to 203 and four plane networks 301 to 304. The network apparatus 201 includes four ports IP1 to IP4, the network apparatus 202 includes four ports IP5 to IP8, and the network apparatus 203 includes four ports IP9 to IP12. The IP1 and the IP6 are connected to the plane network 301, the IP4, the IP5, and the IP12 are connected to the plane network 302, the IP2 is connected to the plane network 303, and the IP3 and the IP9 are connected to the plane network 304.

FIG. 6 is described by using an example in which the network apparatus 201 is a transmitter. FIG. 6 shows an IP mapping table of the network apparatus 201. In the mapping table, a transmission path is represented by using a port of the transmitter and a port of a receiver, a port of the network apparatus 201 is represented as a source (Source, S) port, and ports of the other two network apparatuses are represented as destination (destination, D) ports. Currently, the IP mapping table of the network apparatus 201 records four transmission paths. Bold SIP1-DIP6 and SIP3-DIP9 respectively indicate two transmission path groups. Transmission paths SIP1-DIP6 and SIP4-DIPS in the SIP1-DIP6 group are both displayed as SIP1-DIP6 in a user interface, and transmission paths SIP3-DIP9 and SIP4-DIP12 in the SIP3-DIP9 group are both displayed as SIP3-DIP9 in the user interface.

Currently, a transmission path between the network apparatus 201 and the network apparatus 203 needs to be added. First, the network apparatus 201 obtains an IP address list of the network apparatus 203. Then, the network apparatus 201 and the network apparatus 203 perform ping, to determine that first communication ports of the transmitter include IP1, IP2, IP3, and IP4, and second communication ports of the receiver include IP9, IP10, and IP12. The network apparatus 201 determines, according to the IP mapping table shown in FIG. 6, that a transmission path has been established between IP3 and IP9, and a transmission path has been established between IP4 and IP12. Therefore, a transmission path between IP1 and IP10 or a transmission path between IP2 and IP10 may be established (in FIG. 6, an example in which the transmission path between IP1 and IP10 is established is used). A plane network on the transmission path is the plane network 301. Finally, the network apparatus 201 adds SIP1-DIP10 to the IP mapping table of the network apparatus 201.

In a related technology, an overall network bandwidth is increased by increasing a bandwidth of a network apparatus. The network apparatus in the related technology includes a controller and a physical interface connected to the controller. When the bandwidth of the network apparatus is increased, a transmission bandwidth of the physical interface needs to be increased to meet a network bandwidth requirement of the controller. However, compared with an increase multiple of the network bandwidth requirement, the physical interface increases slowly, and cannot match an increase of the network bandwidth requirement. Consequently, a network bandwidth increase of a single network apparatus is limited.

However, in this embodiment of this application, a port mapping table technology is used to support a user in dynamically adding or deleting a transmission path at a software layer, adding a transmission path when a network bandwidth requirement increases, and disconnecting a part of transmission paths when the network bandwidth requirement decreases, so that network bandwidth expansion or reduction can be implemented without changing a network structure. In addition, each port in a single network apparatus is connected to one physical interface, so that a network bandwidth requirement of a single physical interface is reduced, and a network bandwidth increase of the single network apparatus is no longer limited by a port bandwidth and a physical interface bandwidth. Compared with the related technology, this embodiment of this application effectively increases a network bandwidth capability of the single network apparatus, and improves network construction flexibility.

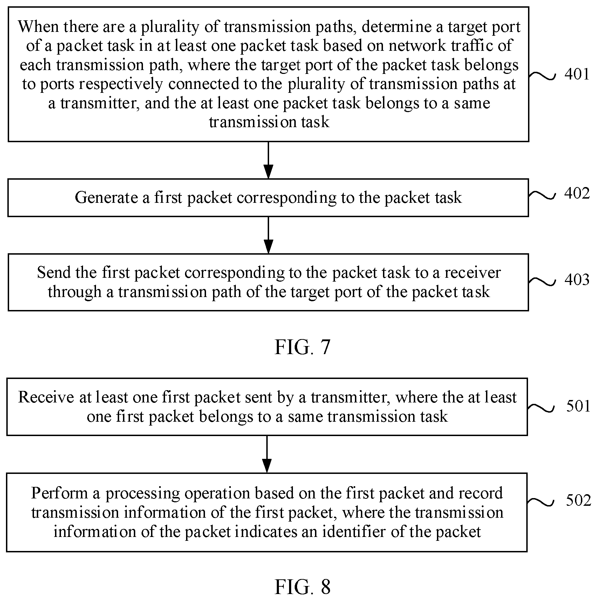

FIG. 7 is a schematic flowchart of a packet transmission method according to an embodiment of this application. The method may be applied to a transmitter in a packet transmission system. The transmitter may be, for example, the network apparatuses shown in FIG. 1 and FIG. 5. At least one port of the transmitter separately establishes a transmission path with one port of a receiver via a plane network. When there are a plurality of transmission paths, plane networks on any two transmission paths may be the same or may be different. This is not limited in embodiments of this application. The method may include the following processes.

401: When there are the plurality of transmission paths, determine a target port of a packet task in at least one first packet task based on network traffic of each transmission path, where the target port of the packet task belongs to ports respectively connected to the plurality of transmission paths at the transmitter, and the at least one first packet task belongs to a same transmission task.

The transmission task may be generated by the transmitter according to user instructions.

402: Generate a first packet corresponding to the packet task.

A length of the first packet is not limited in embodiments of this application.

403: Send the first packet corresponding to the packet task to the receiver through a transmission path of the target port of the packet task.

In conclusion, according to the packet transmission method provided in this embodiment of this application, when there are the plurality of transmission paths, the target port of the packet task in the at least one first packet task is determined based on the network traffic of each transmission path, where the at least one first packet task belongs to the same transmission task. Then, the first packet corresponding to the packet task is generated. Then, the first packet corresponding to the packet task is sent to the receiver through the transmission path of the target port of the packet task. The transmitter adjusts a transmission path of the first packet based on the network traffic of each transmission path, so that a transmission path of each first packet can be adaptively and dynamically allocated based on the network traffic. In this way, receiving and sending resources are shared between different transmission paths with a same destination, and network bandwidth utilization of the transmitter and the receiver is effectively improved.

A packet is allocated based on the network traffic of the transmission path, to effectively prevent the first packet from being allocated to a transmission path on which network congestion occurs, and implement network traffic adjustment on the plurality of transmission paths. This implements network balancing of the plurality of transmission paths between the transmitter and the receiver, and improves overall network stability.

FIG. 8 is a schematic flowchart of another packet transmission method according to an embodiment of this application. The method may be applied to a receiver in a packet transmission system. The receiver may be, for example, the network apparatuses shown in FIG. 1 and FIG. 5. At least one port of the receiver separately establishes a transmission path with one port of a transmitter via a plane network. When there are a plurality of transmission paths, plane networks on any two transmission paths may be the same or may be different. This is not limited in embodiments of this application. The method may include the following processes.

501: Receive at least one first packet sent by the transmitter, where the at least one first packet belongs to a same transmission task.

502: Perform a processing operation based on the first packet and record transmission information of the first packet, where the transmission information of the packet indicates an identifier of the packet.

The identifier of the packet may include a sequence number of the packet.

The receiver may extract data information and the transmission information that are carried in the first packet, then perform a processing operation based on the data information, and record the transmission information.

The data information includes an operation type, and optionally, may further include data required for the processing operation. The operation type may include a migration operation like read or write, and at-most-once semantics operation.

The at-most-once semantics operation means that the receiver can perform only one operation. For a first packet used to implement at-most-once semantics, the receiver performs only one processing operation when repeatedly receiving the first packet for a plurality of times. For example, the at-most-once semantics operation may include an atomic (atomic) operation. The atomic operation may be, for example, adding or comparing data carried in the first packet and corresponding data of the receiver.

In conclusion, according to the packet transmission method provided in this embodiment of this application, the at least one first packet sent by the transmitter is received, where the at least one first packet belongs to the same transmission task, the processing operation is performed based on the first packet, and transmission information of the first packet is recorded, where the transmission information of the packet indicates the identifier of the packet. The transmitter adjusts a transmission path of each first packet based on network traffic of each transmission path, so that the transmitter can adaptively and dynamically allocate the transmission path of each first packet based on the network traffic. In this way, receiving and sending resources are shared between different transmission paths with a same destination, and network bandwidth utilization of the transmitter and the receiver is effectively improved.

A packet is allocated based on the network traffic of the transmission path, to effectively prevent the first packet from being allocated to a transmission path on which network congestion occurs, and implement network traffic adjustment on the plurality of transmission paths. This implements network balancing of the plurality of transmission paths between the transmitter and the receiver, and improves overall network stability.

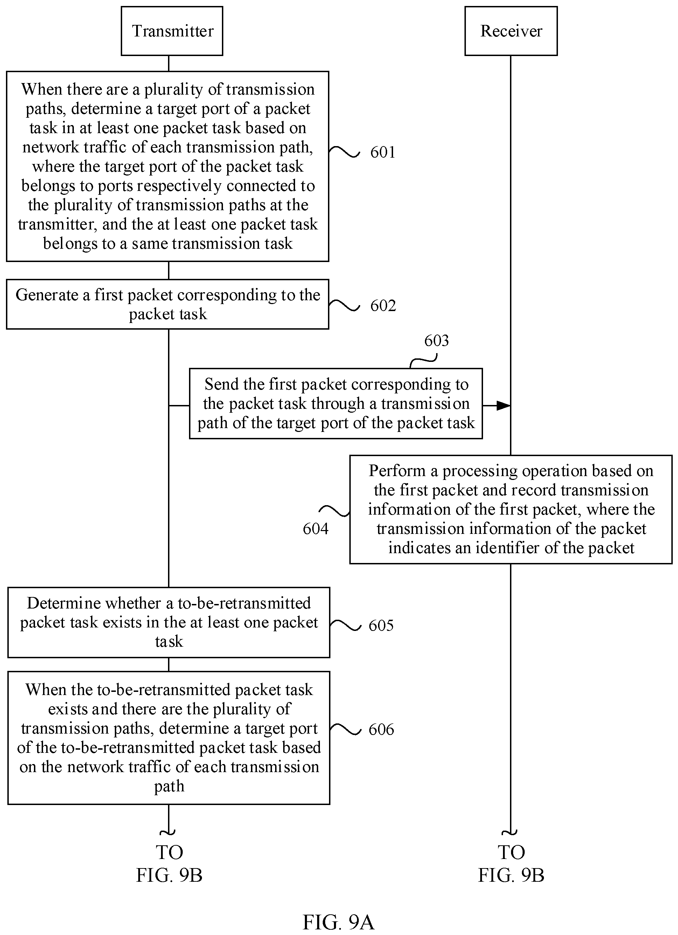

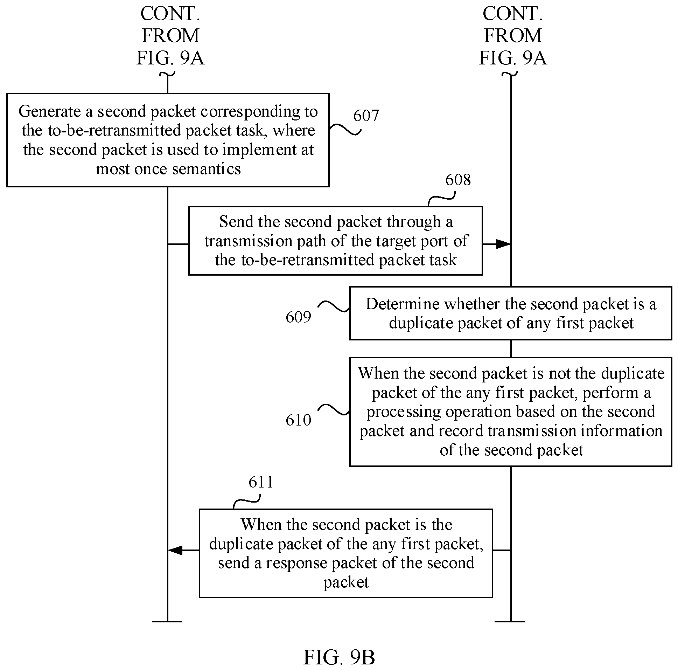

FIG. 9A and FIG. 9B are a schematic flowchart of still another packet transmission method according to an embodiment of this application. The method may be applied to a transmitter and a receiver in a packet transmission system. The transmitter and the receiver may be, for example, the network apparatuses shown in FIG. 1 and FIG. 5. At least one port of the transmitter separately establishes a transmission path with one port of the receiver via a plane network. The method may include the following processes.

601: When there are a plurality of transmission paths, the transmitter determines a target port of a packet task in at least one first packet task based on network traffic of each transmission path, where the target port of the packet task belongs to ports respectively connected to the plurality of transmission paths at the transmitter, and the at least one first packet task belongs to a same transmission task.

Each time the transmitter generates a transmission task, the transmitter writes the transmission task into a corresponding send task queue. Then, a number of a last transmission task to be processed is determined, and the number of the last transmission task is written into a transmission entry for recording. In this way, when a plurality of transmission tasks are not processed currently, a number of a last transmission task that is not processed is recorded. When the transmitter gradually processes to the last transmission task based on numbers of the transmission tasks, it indicates that no unprocessed transmission task exists currently.

The transmitter sequentially processes transmission tasks in a sequence of numbers of the transmission tasks that is recorded in the transmission entry. When a current transmission task is processed, the transmission task is split into at least one first packet task, and the process 601 is performed. As shown in FIG. 5, the process 601 may be performed by the controller. After determining the target port of the packet task, the controller sends the packet task to an agent connected to the target port of the packet task.

The controller may obtain, according to a port mapping table maintained by the transmitter, a current transmission path between the transmitter and the receiver and the ports respectively connected to the transmission paths at the transmitter and the receiver.

When the controller sends the packet task to the agent connected to the target port of the packet task, if the controller is directly connected to each agent, the controller may directly send the packet task to the agent connected to the target port of the packet task. As shown in FIG. 5, if the controller is connected to each agent through a bus, the controller first sends, to the bus, the packet task that carries a transmission path number, where the transmission path number indicates the target port of the packet task. The bus sends the packet task to the agent connected to a port indicated by the transmission path number.

For the network traffic of each transmission path, in an example, the transmitter may actively obtain the network traffic of each transmission path. For example, the transmitter may send a traffic query packet to the receiver or a switching apparatus, and the receiver or the switching apparatus feeds back a response packet of the traffic query packet to the transmitter. The response packet carries network traffic of a transmission path through which the traffic query packet passes.

In another example, the transmitter may passively sense and obtain the network traffic of each transmission path. For example, a packet corresponding to a packet task sent by the transmitter may include a network congestion flag field. If network congestion exists on a transmission path of the packet, the switching apparatus marks, in the network congestion flag field, that network congestion exists on the current transmission path. After receiving the packet, the receiver feeds back a response packet to the transmitter based on the mark in the network congestion flag field. The response packet indicates that network congestion exists on the transmission path of the packet.

Path information of a transmission path of each port may be further recorded in the transmission entry, and the path information includes network traffic and/or a currently transmitted packet.

602: The transmitter generates a first packet corresponding to the packet task.

As shown in FIG. 5, the process 602 may be performed by the agent that receives the packet task. After receiving the packet task sent by the controller, the agent generates the first packet. If data needs to be transmitted, the agent needs to read the corresponding data from memory space, and assemble the data into a packet.

The packet task sent by the controller may further carry transmission information of the packet task and a destination memory address of a packet. The transmission information indicates a sequence number of the packet task in the at least one first packet task. When the agent needs to obtain the packet through assembling, the agent determines a destination IP address, and adds the destination IP address, the transmission information, and the destination memory address to the packet.

603: The transmitter sends the first packet corresponding to the packet task to the receiver through a transmission path of the target port of the packet task.

As shown in FIG. 5, after generating the first packet corresponding to the received packet task, the agent sends the first packet to a connected physical interface. The physical interface performs parallel-to-serial conversion on the first packet, and then sends the converted first packet to the receiver through the transmission path of the connected target port.

604: The receiver performs a processing operation based on the first packet and records transmission information of the first packet, where the transmission information of the packet indicates an identifier of the packet.

As shown in FIG. 5, after receiving the first packet through a connected port, a physical interface of the receiver performs serial-to-parallel conversion on the packet, and then sends the converted first packet to the connected agent. Subsequently, for first packets of different operation types, processing processes of the receiver are different.

When the first packet is not used to implement at-most-once semantics, the agent performs a corresponding processing operation based on extracted data information, and sends the extracted transmission information to the controller. The controller records the received transmission information. The receiver maintains a transmission entry, and the controller may write the transmission information into the transmission entry, to record the transmission information of the packet. For example, the operation type extracted by the agent is a write operation. After completing verification on the extracted data, the agent stores the data in corresponding memory space, for example, stores the data in corresponding storage space.

When the first packet is used to implement the at-most-once semantics, the agent sends the first packet to the controller. The controller obtains the data information and the transmission information by extracting the received packet, then performs the processing operation based on the data information, and records the extracted transmission information. For example, the operation type extracted by the agent is an addition operation. After completing verification on the extracted data, the agent performs an addition operation on the extracted data and target data of the receiver, to obtain data obtained through the operation. Then, the receiver may send a response packet of the first packet to the transmitter, where the response packet carries the data obtained through the operation.

If the receiver performs a processing operation each time the receiver receives a same first packet used to implement at-most-once semantics, there is a deviation in data obtained through the operation. In this embodiment of this application, if the agent performs a processing operation on the first packet used to implement at-most-once semantics, because the agents are independent, when the receiver receives, for a plurality of times, the same first packet used to implement at-most-once semantics, each agent that receives the first packet performs a processing operation. As a result, a deviation occurs in an operation result of the first packet. Therefore, the controller performs a processing operation on the first packet used to implement at-most-once semantics, so that a plurality of processing operations can be avoided. This ensures accuracy of data obtained through the operation.

605: The transmitter determines whether a to-be-retransmitted packet task exists in the at least one first packet task.

When an exception like congestion occurs on a transmission path of a packet, the packet is lost. To ensure integrity of packet transmission, it needs to be determined whether the to-be-retransmitted packet task exists in the at least one first packet task. This process may be performed by the controller of the transmitter.

In a first example, the transmitter retransmits the first packet according to a timeout retransmission mechanism. Each time the receiver receives a first packet, the receiver sends response information of the first packet to the transmitter. The response information may be, for example, an acknowledge (Acknowledge, ACK) character. After the transmitter sends any first packet in the foregoing process, if the transmitter does not receive response information of the first packet within preset time, the transmitter determines a packet task corresponding to the first packet as a to-be-retransmitted packet task.

In a second example, the transmitter retransmits the packet according to a SACK acknowledgment mechanism. Each time the receiver receives a first packet, the receiver sends, to the transmitter, a next sequence number of a largest sequence number in consecutive sequence numbers of packet segments that are currently received for the first time and a sequence number range of all the currently received packet segments. After sending any first packet in the foregoing process, the transmitter determines, based on the next sequence number of the largest sequence number and the sequence number range, whether the to-be-retransmitted packet task exists.

For example, it is assumed that the receiver first receives a first packet of a sequence number 1. In this case, the next sequence number of the largest sequence number in the consecutive sequence numbers of the packet segments that are currently received for the first time is 2, and the sequence number range of all the currently received packet segments is {1}. Then, a first packet of a sequence number 2 is received. In this case, the next sequence number of the largest sequence number in the consecutive sequence numbers of the packet segments that are currently received for the first time is 3, and the sequence number range of all the currently received packet segments is {1 to 2}. Then, the receiver does not receive a first packet of a sequence number 3, and subsequently receives a first packet of a sequence number 4. In this case, the next sequence number of the largest sequence number in the consecutive sequence numbers of the packet segments that are currently received for the first time is still 3, and the sequence number range of all the currently received packet segments is {1 to 2, 4}. The transmitter may determine, based on 3 and {1 to 2, 4}, that the first packet of the sequence number 3 is lost, and determine a packet task corresponding to the first packet of the sequence number 3 as a to-be-retransmitted packet task. Subsequently, the receiver continues to receive a first packet of a sequence number 5. In this case, the next sequence number of the largest sequence number in the consecutive sequence numbers of the packet segments that are currently received for the first time is still 3, and the sequence number range of all the currently received packet segments is {1 to 2, 4 to 5}. The transmitter may determine, based on 3 and {1 to 2, 4 to 5}, that the first packet of the sequence number 3 is lost, and determine the packet task corresponding to the first packet of the sequence number 3 as a to-be-retransmitted packet task.

In a third example, when a sending condition is met, the receiver may send an information packet to the transmitter through a transmission path of the receiver, where the information packet carries receiving status information, and the receiving status information indicates the first packet that belongs to the transmission task and that has been received by the receiver. The sending condition may include that the receiver receives a preset quantity of first packets that belong to the transmission task, or transmission of the transmission task to which at least one first packet task belongs is completed. For a process of sending the information packet, refer to the foregoing process of sending the at least one first packet. Details are not described herein again in this embodiment of this application. The transmitter determines, based on the receiving status information, whether the to-be-retransmitted packet task exists in the at least one first packet task.

In this example, the transmitter may further determine, based on the information packet, whether the transmission task is completed. If the receiving status information in the information packet received by the transmitter indicates all first packets in the transmission task, the transmitter determines that the transmission task has been completed. The transmitter maintains a completion queue. The completion queue is used to record completion information of a transmission task that has been completed. The transmitter may write completion information of the transmission task into the completion queue. A user may query whether the transmission task is completed by polling the completion queue.

As shown in FIG. 5, when determining that the sending condition is met, a controller of the receiver determines a first available port connected to any available transmission path of the receiver at the receiver, and sends the receiving status information to an agent connected to the first available port. The agent generates the information packet based on the receiving status information, and sends the information packet to the transmitter through a transmission path of the connected first available port. An agent of the transmitter receives the information packet, extracts the receiving status information from the information packet, and sends the receiving status information to the controller. The controller determines, based on the receiving status information, whether the to-be-retransmitted packet task exists in the at least one first packet task, or determines whether the transmission task is completed.

606: When the to-be-retransmitted packet task exists and there are the plurality of transmission paths, the transmitter determines a target port of the to-be-retransmitted packet task based on the network traffic of each transmission path.

The target port of the to-be-retransmitted packet task belongs to the ports respectively connected to the plurality of transmission paths at the transmitter. For this process, refer to the foregoing process 601. In this process, the transmitter reselects the target port of the to-be-retransmitted packet task based on the network traffic of the transmission path. The reselected target port may be the same as or different from the target port of the previous packet task. This is not limited in embodiments of this application.

607: The transmitter generates a second packet corresponding to the to-be-retransmitted packet task, where the second packet is used to implement at-most-once semantics.

For this process, refer to the foregoing process 602. Details are not described herein again in this embodiment of this application.

608: The transmitter sends the second packet to the receiver through a transmission path of the target port of the to-be-retransmitted packet task.

After an agent of the receiver receives the second packet, because the second packet is used to implement the at-most-once semantics, the agent sends the second packet to the controller. For this process, refer to the foregoing process 603. Details are not described herein again in this embodiment of this application.

609: The receiver determines whether the second packet is a duplicate packet of any first packet.

Optionally, the receiver may determine, based on transmission information of the second packet, whether the second packet is the duplicate packet of the any first packet. It can be learned from the foregoing description that the receiver maintains the transmission entry, and the receiver may determine whether the transmission entry records transmission information of the second packet. When the transmission entry records the transmission information of the second packet, the receiver determines that the second packet is a duplicate packet of a first packet corresponding to the transmission information. When the transmission entry does not record the transmission information of the second packet, the receiver determines that the second packet is not the duplicate packet of the any first packet. The process may be performed by the controller.

610: When the second packet is not the duplicate packet of the any first packet, the receiver performs a processing operation based on the second packet and records the transmission information of the second packet.

For this process, refer to the foregoing process 604. Details are not described herein again in this embodiment of this application.

611: When the second packet is the duplicate packet of the any first packet, the receiver skips performing the processing operation based on the second packet.

When the second packet is the duplicate packet of the any first packet, the receiver may further send a response packet of the second packet to the transmitter. Optionally, if the second packet is used to request to return response data to the transmitter, the response packet sent by the receiver further needs to carry the response data. The response data may include original data corresponding to a processing operation performed based on the any first packet, that is, data on which no processing operation is performed based on the any first packet.

The process may be performed by the controller. The controller may record original data and an operation type that correspond to each received packet and an identifier of a transmission task to which the received packet belongs. After receiving the second packet, if the receiver needs to return the original data corresponding to the processing operation performed based on the any first packet, the receiver sends, to the transmitter as the response data, the recorded original data corresponding to the any first packet.

For this process, refer to the foregoing process 605 in which the receiver sends the information packet. The controller may first determine a second available port connected to any available transmission path at the receiver, and then send response information of the second packet to an agent connected to the second available port. The response information may include an acknowledge character and the like, and the acknowledge character indicates that the receiver has received the second packet. If response data further needs to be sent to the receiver, the response information further includes the response data of the second packet. The agent generates a response packet based on the received response information, and sends the response packet to the transmitter through a transmission path of the connected second available port.

The foregoing process 606 to process 611 are described by using one to-be-retransmitted packet task as an example. When the to-be-retransmitted packet task exists in the at least one first packet task, the foregoing process 605 to process 611 need to be performed until no to-be-retransmitted packet task exists in the at least one first packet task. In an entire packet retransmission process, the receiver may receive repeated or out-of-order to-be-retransmitted packets. As described above, the receiver may not process the repeated to-be-retransmitted packet. For the out-of-order to-be-retransmitted packet, refer to the foregoing process 602. The to-be-retransmitted packet carries a destination memory address, and the receiver may directly store the out-of-order to-be-retransmitted packet in memory space indicated by the destination memory address.

A related technology provides a scalable reliable datagram (Scalable Reliable Datagram, SRD) technology. In the SRD technology, a driver of a transmitter divides a transmission task into a plurality of subflows, and selects different transmission paths to transmit the subflows. A driver of a receiver reorders the received subflows and returns the subflows to an upper-layer application. The receiver performs reordering by using software. Therefore, large buffer space is required to buffer out-of-order packets, and then the packets are reordered. As a result, large memory space is occupied in a packet transmission process. In addition, a size of the buffer space limits a quantity of transmission paths.

However, in this embodiment of this application, a packet carries a destination memory address, and the receiver may directly store the packet in memory space indicated by the destination memory address carried in the packet, without establishing buffer space. Compared with the related technology, this technology reduces memory space occupied in a packet transmission process, and a quantity of transmission paths is not limited, thereby increasing overall network bandwidth growth space.

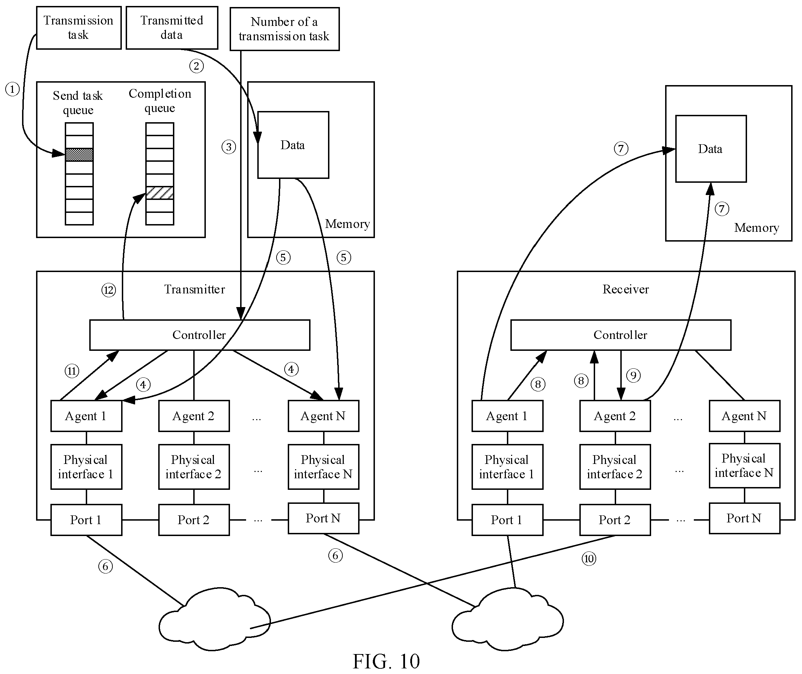

For example, FIG. 10 is a diagram of a packet transmission process according to an embodiment of this application. In FIG. 10, a process of transmitting data from a memory of a transmitter to a memory of a receiver is described by using a write operation type (that is, a packet is not used to implement at-most-once semantics) as an example. FIG. 10 shows the transmitter and the receiver. ① indicates that the transmitter generates a transmission task and writes the transmission task into a send task queue. ② indicates that the transmitter writes transmitted data into memory space. ③ indicates that a number of a last transmission task is written into a transmission entry for recording ④ indicates that after determining a target port of each packet task, a controller sends the packet task to an agent connected to the target port of the packet task. ⑤ indicates that an agent reads corresponding data from the memory space, and assembles the data into a packet. ⑥ indicates that the packet is sent to the receiver through a transmission path of a connected target port.

⑦ indicates that an agent extracts the data carried in the received packet and stores the data in corresponding memory space. ⑧ indicates that the agent sends transmission information to the controller after extracting the transmission information carried in the received packet. ⑨ indicates that when determining that a sending condition is met, a controller of the receiver determines an available port at the receiver, and sends receiving status information to an agent connected to the available port. ⑩ indicates that the agent generates an information packet based on the receiving status information, and then sends the information packet to the transmitter through a transmission path of the connected available port. ⑪ indicates that an agent that receives the information packet obtains the receiving status information by extracting the information packet, and sends the receiving status information to the controller ⑫ indicates that after determining, based on the receiving status information, that the transmission task is completed, the controller writes completion information of the transmission task into a completion queue.

In conclusion, according to the packet transmission method provided in embodiments of this application, when there are the plurality of transmission paths, the target port of the packet task in the at least one first packet task is determined based on the network traffic of each transmission path. Then, the first packet corresponding to the packet task is generated, and the first packet corresponding to the packet task is sent to the receiver through the transmission path of the target port of the packet task. The receiver performs the processing operation based on the first packet, and records the transmission information of the first packet, where the transmission information of the packet indicates the identifier of the packet. The transmitter adjusts a transmission path of the first packet based on the network traffic of each transmission path, so that a transmission path of each first packet can be adaptively and dynamically allocated based on the network traffic. In this way, receiving and sending resources are shared between different transmission paths with a same destination, and network bandwidth utilization of the transmitter and the receiver is effectively improved.

In addition, a packet is allocated based on the network traffic of the transmission path, to effectively prevent the packet from being allocated to a transmission path on which network congestion occurs, and implement network traffic adjustment on the plurality of transmission paths. This implements network balancing of the plurality of transmission paths between the transmitter and the receiver, and improves overall network stability.

In an existing NVLink technology, routing is performed based on a memory address. However, in embodiments of this application, software does not participate in complex scheduling, and a hardware controller performs routing based on network traffic of a transmission path. A transmission task is not coupled to an address, so that network transmission performance between the transmitter and the receiver can be improved. In addition, unified address coding does not need to be performed on a plurality of network apparatuses, so that a quantity of network apparatuses is not limited, and space for improving an overall network bandwidth is increased. Plane networks on any two transmission paths between the transmitter and the receiver may be the same or may be different. Therefore, in embodiments of this application, packet transmission may be performed via a plurality of plane networks. This effectively improves transmission efficiency and a network bandwidth.

In an existing SRD technology, routing is performed in an equal-cost multi-path (Equal-Cost Multi-path, ECMP) routing mode. The ECMP routing mode causes packet disorder. Therefore, the receiver needs to first store received packets in buffer space, reorder the out-of-order packets by using software, and then dump the reordered packets from the buffer space to memory space (that is, memory copy). The software re-ordering and memory copy processes reduce packet transmission efficiency. However, in embodiments of this application, a packet carries a sequence number and a destination memory address of the packet. Therefore, the packet may be directly stored in corresponding memory space based on the sequence number and the destination memory address, and software re-ordering and memory copy are not required. Compared with the SRD technology, embodiments of this application improve the packet transmission efficiency.

In addition, the transmitter may determine whether a to-be-retransmitted packet task exists in the at least one first packet task. When the to-be-retransmitted packet task exists and there are the plurality of transmission paths, the transmitter determines a target port of the to-be-retransmitted packet task based on the network traffic of each transmission path. Then, the transmitter generates a second packet corresponding to the to-be-retransmitted packet task, where the second packet is used to implement at-most-once semantics; and sends the second packet to the receiver through a transmission path of the target port of the to-be-retransmitted packet task. The receiver determines whether the second packet is a duplicate packet of any first packet. When the second packet is not the duplicate packet of the any first packet, the receiver performs a processing operation based on the second packet and records transmission information of the second packet; or when the second packet is the duplicate packet of the any first packet, the receiver skips performing the processing operation based on the second packet. In the existing SRD technology, integrity of a packet is ensured by using a subflow, which increases complexity of maintaining an entry of subflow context. After a packet is lost in a subflow, the packet is retransmitted through an original path. If the packet is lost on the original path due to a fault like network congestion, the retransmitted packet may still be lost. However, in embodiments of this application, the transmitter and the receiver record information such as a currently transmitted packet and a received packet in respective entry content maintained by the transmitter and the receiver. Entry maintenance complexity is low. After the second packet is generated, a transmission path of the second packet is reselected. This reduces a loss probability of the second packet, effectively implements integrity transmission of the packet, and reduces a transmission delay of the second packet.

In addition, in the existing SRD technology, transmission of a packet used to implement at-most-once semantics is not supported. However, in embodiments of this application, for the second packet used to implement the at-most-once semantics, when the second packet is a packet repeatedly received by the receiver, the processing operation is not performed based on the second packet. This effectively supports the transmission of the packet used to implement at-most-once semantics.

A sequence of the methods provided in embodiments of this application may be properly adjusted, or a process may be correspondingly added or deleted based on a situation. Any variation method readily figured out by a person skilled in the art within the technical scope disclosed in this application shall fall within the protection scope of this application. This is not limited in embodiments of this application.

The foregoing mainly describes the packet transmission methods provided in embodiments of this application from a perspective of interaction between devices. It may be understood that, to implement the foregoing functions, each device includes a corresponding hardware structure and/or a corresponding software module for performing each function. A person skilled in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

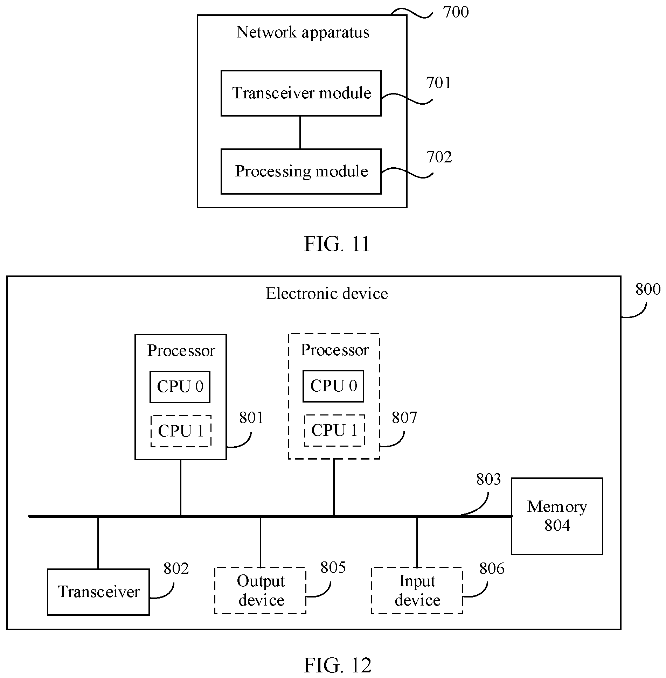

FIG. 11 is a block diagram of a network apparatus according to an embodiment of this application. When each functional module is obtained through division based on each corresponding function, the network apparatus 700 may include a transceiver module 701 and a processing module 702. For example, the network apparatus may be a transmitter or a receiver, or may be a chip in the transmitter or the receiver, or another combined device or component that has a function of the network apparatus. When the network apparatus 700 is a transmitter or a receiver, the transceiver module 701 may be a transceiver, and the transceiver may include an antenna, a radio frequency circuit, and the like; and the processing module 702 may be a processor (or a processing circuit), for example, a baseband processor, and the baseband processor may include one or more central processing units (central processing units, CPUs). When the network apparatus 700 is a device or a component having the foregoing function, the transceiver module 701 may be a radio frequency unit, and the processing module 702 may be a processor (or a processing circuit), for example, a baseband processor. When the network apparatus 700 is a chip system, the transceiver module 701 may be an input/output interface of a chip (for example, a baseband chip); and the processing module 702 may be a processor (or a processing circuit) of the chip system, and may include one or more central processing units. It should be understood that the transceiver module 701 in this embodiment of this application may be implemented by a transceiver or a transceiver-related circuit component, and the processing module 702 may be implemented by a processor or a processor-related circuit component (or referred to as a processing circuit).

For example, when the network apparatus 700 is a chip or a functional unit of the transmitter, the transceiver module 701 may be configured to perform all receiving and sending operations performed by the transmitter in the embodiment shown in FIG. 7 or FIG. 9A and FIG. 9B, and/or configured to support another process of the technology described in this specification, and the processing module 702 may be configured to perform all operations, other than the receiving and sending operations, performed by the transmitter in the embodiment shown in FIG. 7 or FIG. 9A and FIG. 9B, and/or configured to support another process of the technology described in this specification.

The transceiver module 701 may include a sending module and/or a receiving module, respectively configured to perform sending and receiving operations performed by the transmitter in the embodiment shown in FIG. 7 or FIG. 9A and FIG. 9B. At least one port of the transmitter establishes a transmission path with one port of a receiver via a plane network. The network apparatus includes:
a processing module, configured to: when there are a plurality of transmission paths, determine a target port of a packet task in at least one first packet task based on network traffic of each transmission path, where the target port of the packet task belongs to ports respectively connected to the plurality of transmission paths at the transmitter, and the at least one first packet task belongs to a same transmission task, where the processing module is further configured to generate a first packet corresponding to the packet task; and a transceiver module, configured to send the first packet corresponding to the packet task to the receiver through a transmission path of the target port of the packet task.

With reference to the foregoing solution, the processing module is further configured to determine a first port of the transmitter and a second port of the receiver, where the first port and the second port are capable of communicating with each other and no transmission path is established between the first port and the second port. The transceiver module is further configured to establish a connection to the second port through the first port, to obtain a transmission path between the first port and the second port.

With reference to the foregoing solution, the processing module is specifically configured to: determine a first communication port of the transmitter and a second communication port of the receiver according to a port identifier list of the receiver, where the first communication port includes a port that is in a plurality of ports of the transmitter and that is capable of communicating with the receiver, the second communication port includes a port that is in a plurality of ports of the receiver and that is capable of communicating with the transmitter, and the port identifier list includes an identifier of each port of the receiver; determine the first port from the first communication port and determine the second port from the second communication port according to a port mapping table of the transmitter, where the port mapping table records a current transmission path between the transmitter and the receiver; and add the transmission path between the second port and the first port to the port mapping table of the transmitter.

With reference to the foregoing solution, the processing module is further configured to determine whether a to-be-retransmitted packet task exists in the at least one first packet task. The processing module is further configured to: when the to-be-retransmitted packet task exists and there are the plurality of transmission paths, determine a target port of the to-be-retransmitted packet task based on the network traffic of each transmission path, where the target port of the to-be-retransmitted packet task belongs to the ports respectively connected to the plurality of transmission paths at the transmitter. The processing module is further configured to generate a second packet corresponding to the to-be-retransmitted packet task. The transceiver module is further configured to send the second packet to the receiver through a transmission path of the target port of the to-be-retransmitted packet task.

With reference to the foregoing solution, the transceiver module is further configured to receive an information packet sent by the receiver, where the information packet carries receiving status information, and the receiving status information indicates the first packet that has been received by the receiver. The processing module is further configured to determine, based on the information packet, whether the transmission task is completed.

With reference to the foregoing solution, the processing module is further configured to determine a to-be-disconnected path based on the network traffic of each transmission path, where the to-be-disconnected path is separately connected to a third port and a fourth port at the transmitter and the receiver. The transceiver module is further configured to disconnect from the fourth port through the third port.

For example, when the network apparatus 700 is a chip or a functional unit of the receiver, the transceiver module 701 may be configured to perform all receiving and sending operations performed by the receiver in the embodiment shown in FIG. 8 or FIG. 9A and FIG. 9B, and/or configured to support another process of the technology described in this specification, and the processing module 702 may be configured to perform all operations, other than the receiving and sending operations, performed by the receiver in the embodiment shown in FIG. 8 or FIG. 9A and FIG. 9B, and/or configured to support another process of the technology described in this specification.

The transceiver module 701 may include a sending module and/or a receiving module, respectively configured to perform sending and receiving operations performed by the receiver in the embodiment shown in FIG. 8 or FIG. 9A and FIG. 9B. At least one port of the receiver establishes a transmission path with one port of a transmitter via a plane network. The network apparatus includes:
a transceiver module, configured to receive at least one first packet sent by the transmitter, where the at least one first packet belongs to a same transmission task; and a processing module, configured to perform a processing operation based on the first packet and recording transmission information of the first packet, where the transmission information of the packet indicates an identifier of the packet.

With reference to the foregoing solution, the transceiver module is further configured to establish a connection to a second port of the transmitter through a first port of the receiver, to obtain a transmission path between the first port and the second port, where the first port and the second port are capable of communicating with each other. The processing module is further configured to add the transmission path between the first port and the second port to a port mapping table of the receiver.

With reference to the foregoing solution, the transceiver module is further configured to receive a second packet sent by the transmitter, where the second packet is used to implement at-most-once semantics. The processing module is further configured to determine whether the second packet is a duplicate packet of any first packet. The processing module is further configured to: when the second packet is not the duplicate packet of the any first packet, perform a processing operation based on the second packet and record transmission information of the second packet; or the processing module is further configured to: when the second packet is the duplicate packet of the any first packet, skip performing the processing operation based on the second packet.

With reference to the foregoing solution, the transceiver module is further configured to: when the second packet is the duplicate packet of the any first packet, send a response packet of the second packet to the transmitter.

With reference to the foregoing solution, the transceiver module is further configured to: when a sending condition is met, send an information packet to the transmitter through the transmission path, where the information packet carries receiving status information, and the receiving status information indicates the first packet that has been received by the receiver.

With reference to the foregoing solution, the processing module is further configured to determine a to-be-disconnected path based on network traffic of each transmission path, where the to-be-disconnected path is separately connected to a third port and a fourth port at the transmitter and the receiver. The transceiver module is further configured to disconnect from the third port through the fourth port.

FIG. 12 is a diagram of a structure of an electronic device according to an embodiment of this application. The electronic device 800 may be a transmitter or a chip or a functional module in the transmitter, or may be a receiver or a chip or a functional module in the receiver. As shown in FIG. 12, the electronic device 800 includes a processor 801, a transceiver 802, and a communication line 803.

The processor 801 is configured to perform any step in the method embodiments shown in FIG. 7 to FIG. 9A and FIG. 9B, and when performing a process like sending a first packet corresponding to each packet task, the processor 801 may select to invoke the transceiver 802 and the communication line 803 to complete a corresponding operation.

Further, the electronic device 800 may further include a memory 804. The processor 801, the memory 804, and the transceiver 802 may be connected through the communication line 803.

The processor 801 is a processor, a general-purpose processor, a network processor (network processor, NP), a digital signal processor (digital signal processor, DSP), a microprocessor, a microcontroller, a programmable logic device (programmable logic device, PLD), or any combination thereof. The processor 801 may alternatively be another apparatus having a processing function, for example, a circuit, a component, or a software module. This is not limited.

The transceiver 802 is configured to communicate with another device or another communication network. The another communication network may be the Ethernet, a radio access network (radio access network, RAN), a wireless local area network (wireless local area network, WLAN), or the like. The transceiver 802 may be a module, a circuit, a transceiver, or any apparatus that can implement communication.

The transceiver 802 is mainly configured to receive and send a packet, and may include a transmitter and a receiver, to separately send and receive a packet. Operations other than packet receiving and sending are implemented by the processor, for example, a target port of each packet task is determined from at least one port based on network traffic of a transmission path of each port.

The communication line 803 is configured to transmit information between components included in the electronic device 800.

In a design, the processor may be considered as a logic circuit, and the transceiver may be considered as an interface circuit.

The memory 804 is configured to store instructions. The instructions may be a computer program.

The memory 804 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory 804 may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium, another magnetic storage device, or the like. It should be noted that the memory of the systems and methods described in this specification includes but is not limited to these and any memory of another proper type.

It should be noted that the memory 804 may exist independently of the processor 801, or may be integrated with the processor 801. The memory 804 may be configured to store instructions, program code, some data, or the like. The memory 804 may be located in the electronic device 800, or may be located outside the electronic device 800. This is not limited. The processor 801 is configured to execute the instructions stored in the memory 804, to implement the method provided in the foregoing embodiments of this application.

In an example, the processor 801 may include one or more processors, such as a processor 0 and a processor 1 in FIG. 12.

In an optional implementation, the electronic device 800 includes a plurality of processors. For example, in addition to the processor 801 in FIG. 12, the electronic device 800 may further include a processor 807.

In an optional implementation, the electronic device 800 further includes an output device 805 and an input device 806. For example, the input device 806 is a device like a keyboard, a mouse, a microphone, or a joystick, and the output device 805 is a device like a display or a speaker (speaker).

It should be noted that the electronic device 800 may be a chip system or a device having a structure similar to that in FIG. 12. The chip system may include a chip, or may include a chip and another discrete device. For actions, terms, and the like in embodiments of this application, refer to each other. This is not limited. In embodiments of this application, names of messages exchanged between devices, names of parameters in the messages, or the like are merely examples. Other names may alternatively be used during specific implementation. This is not limited. In addition, the composition structure shown in FIG. 12 does not constitute a limitation on the electronic device 800. In addition to the components shown in FIG. 12, the electronic device 800 may include more or fewer components than those shown in FIG. 12, or combine some components, or have different component arrangements.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (N-channel Metal oxide semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

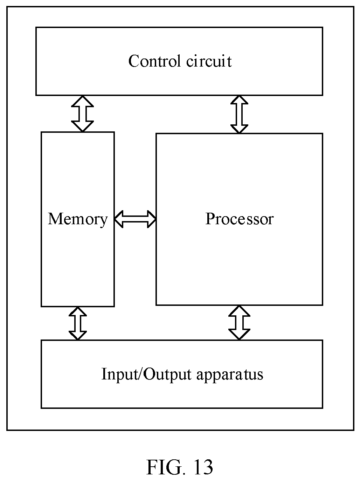

FIG. 13 is a diagram of a structure of a network apparatus according to an embodiment of this application. The network apparatus is applicable to the scenario shown in the foregoing method embodiment. For ease of description, FIG. 13 shows only main components of the network apparatus, including a processor, a memory, a control circuit, and an input/output apparatus. The processor is mainly configured to: process a communication protocol and communication data, execute a software program, and process data of the software program. The memory is mainly configured to store the software program and data. The control circuit is mainly configured to supply power and transmit various electrical signals. The input/output apparatus is mainly configured to receive data input by a user and output data to the user.

When the network apparatus is a transmitter or a receiver, the control circuit may be a main board, the memory includes a medium having a storage function, for example, a hard disk, a RAM, or a ROM; the processor may include a baseband processor and a central processing unit, the baseband processor is mainly configured to process a communication protocol and communication data, and the central processing unit is mainly configured to: control the entire network apparatus, execute a software program, and process data of the software program; and the input/output apparatus includes a display, a keyboard, a mouse, and the like. The control circuit may further include or be connected to a transceiver circuit or a transceiver, for example, a network cable interface, and is configured to send or receive data or a signal, for example, perform data transmission and communication with another device. Further, the control circuit may further include an antenna, configured to receive and send a radio signal, and configured to perform data/signal transmission with another device.

According to the methods provided in embodiments of this application, this application further provides a computer program product. The computer program product includes computer program code, and when the computer program code is run on a computer, the computer is enabled to perform the method according to any one of embodiments of this application.

An embodiment of this application further provides a computer-readable storage medium. All or some of the procedures in the foregoing method embodiments may be completed by a computer or an apparatus having a packet transmission capability by executing a computer program or instructions, to control related hardware. The computer program or the instructions may be stored in the computer-readable storage medium. When the computer program or the instructions are executed, the procedures of the foregoing method embodiments may be included. The computer-readable storage medium may be an internal storage unit of the transmitter or the receiver in any one of the foregoing embodiments, for example, a hard disk or a memory of the transmitter or the receiver. The computer-readable storage medium may alternatively be an external storage device of the transmitter or the receiver, for example, a plug-in hard disk, a smart media card (smart media card, SMC), a secure digital (secure digital, SD) card, or a flash card (flash card), configured for the transmitter or the receiver. Further, the computer-readable storage medium may include both the internal storage unit and the external storage device of the transmitter or the receiver. The computer-readable storage medium is configured to store the computer program or the instructions and another program and data that are required by the transmitter or the receiver. The computer-readable storage medium may be further configured to temporarily store data that has been output or is to be output.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet transmission method, applied to a transmitter, wherein at least one port of the transmitter separately establishes a transmission path with one port of a receiver via a plane network, and the method comprises:
when there are a plurality of transmission paths, determining a target port of a packet task in at least one first packet task based on network traffic of each transmission path, wherein the target port of the packet task belongs to ports respectively connected to the plurality of transmission paths at the transmitter, and the at least one first packet task belongs to a same transmission task;
generating a first packet corresponding to the packet task; and
sending the first packet corresponding to the packet task to the receiver through a transmission path of the target port of the packet task.

2. The method according to claim 1, wherein the method further comprises:
determining a first port of the transmitter and a second port of the receiver, wherein the first port and the second port are capable of communicating with each other and no transmission path is established between the first port and the second port; and
establishing a connection to the second port through the first port, to obtain a transmission path between the first port and the second port.

3. The method according to claim 2, wherein determining the first port of the transmitter and the second port of the receiver comprises:
determining a first communication port of the transmitter and a second communication port of the receiver according to a port identifier list of the receiver, wherein the first communication port comprises a port that is in a plurality of ports of the transmitter and that is capable of communicating with the receiver, the second communication port comprises a port that is in a plurality of ports of the receiver and that is capable of communicating with the transmitter, and the port identifier list comprises an identifier of each port of the receiver; and
determining the first port from the first communication port and determining the second port from the second communication port according to a port mapping table of the transmitter, wherein the port mapping table records a current transmission path between the transmitter and the receiver; and
the method further comprises:
adding the transmission path between the second port and the first port to the port mapping table of the transmitter.

4. The method according to any one of claims 1 to 3, wherein the method further comprises:
determining whether a to-be-retransmitted packet task exists in the at least one first packet task;
when the to-be-retransmitted packet task exists and there are the plurality of transmission paths, determining a target port of the to-be-retransmitted packet task based on the network traffic of each transmission path, wherein the target port of the to-be-retransmitted packet task belongs to the ports respectively connected to the plurality of transmission paths at the transmitter;
generating a second packet corresponding to the to-be-retransmitted packet task; and
sending the second packet to the receiver through a transmission path of the target port of the to-be-retransmitted packet task.

5. The method according to any one of claims 1 to 4, wherein the method further comprises:
receiving an information packet sent by the receiver, wherein the information packet carries receiving status information, and the receiving status information indicates the first packet that has been received by the receiver; and
determining, based on the information packet, whether the transmission task is completed.

6. The method according to any one of claims 1 to 5, wherein the method further comprises:
determining a to-be-disconnected path based on the network traffic of each transmission path, wherein the to-be-disconnected path is separately connected to a third port and a fourth port at the transmitter and the receiver; and
disconnecting from the fourth port through the third port.

7. A packet transmission method, applied to a receiver, wherein at least one port of the receiver separately establishes a transmission path with one port of a transmitter via a plane network, and the method comprises:
receiving at least one first packet sent by the transmitter, wherein the at least one first packet belongs to a same transmission task; and
performing a processing operation based on the first packet and recording transmission information of the first packet, wherein the transmission information of the packet indicates an identifier of the packet.

8. The method according to claim 7, wherein the method further comprises:
establishing a connection to a second port of the transmitter through a first port of the receiver, to obtain a transmission path between the first port and the second port, wherein the first port and the second port are capable of communicating with each other; and
adding the transmission path between the first port and the second port to a port mapping table of the receiver.

9. The method according to claim 7 or 8, wherein the method further comprises:
receiving a second packet sent by the transmitter, wherein the second packet is used to implement at-most-once semantics;
determining whether the second packet is a duplicate packet of any first packet; and
when the second packet is not the duplicate packet of the any first packet, performing a processing operation based on the second packet and recording transmission information of the second packet; or
when the second packet is the duplicate packet of the any first packet, skipping performing the processing operation based on the second packet.

10. The method according to claim 9, wherein the method further comprises:
when the second packet is the duplicate packet of the any first packet, sending a response packet of the second packet to the transmitter.

11. The method according to any one of claims 7 to 10, wherein the method further comprises:
when a sending condition is met, sending an information packet to the transmitter through the transmission path, wherein the information packet carries receiving status information, and the receiving status information indicates the first packet that has been received by the receiver.

12. The method according to any one of claims 7 to 11, wherein the method further comprises:
determining a to-be-disconnected path based on network traffic of each transmission path, wherein the to-be-disconnected path is separately connected to a third port and a fourth port at the transmitter and the receiver; and
disconnecting from the third port through the fourth port.

13. A network apparatus, used in a transmitter, wherein the apparatus comprises:
a controller, a plurality of agents connected to the controller, and a plurality of ports, wherein the plurality of agents are connected to the plurality of ports in one-to-one correspondence, and at least one of the plurality of ports separately establishes a transmission path with a receiver via a plane network, wherein
the controller is configured to: when there are a plurality of transmission paths, determine a target port of the packet task in at least one first packet task based on network traffic of each transmission path, wherein the target port of the packet task belongs to ports respectively connected to the plurality of transmission paths at the transmitter, and the at least one first packet task belongs to a same transmission task;
the controller is further configured to send the packet task to an agent connected to the target port of the packet task; and
the agent is configured to: generate a first packet corresponding to the received packet task, and send the generated first packet to the receiver through a transmission path of the connected port.

14. The apparatus according to claim 13, wherein the apparatus further comprises:
a plurality of physical interfaces connected to the plurality of agents in one-to-one correspondence, wherein the plurality of physical interfaces are connected to the plurality of ports in one-to-one correspondence;
the agent is specifically configured to send the generated first packet to a connected physical interface; and
the physical interface is configured to: perform parallel-to-serial conversion on the received first packet, and send the converted first packet to the receiver through the transmission path of the connected port.

15. The apparatus according to claim 13 or 14, wherein
the controller is further configured to determine whether a to-be-retransmitted packet task exists in the at least one first packet task;
the controller is further configured to: when the to-be-retransmitted packet task exists and there are the plurality of transmission paths, determine a target port of the to-be-retransmitted packet task based on the network traffic of each transmission path, wherein the target port of the to-be-retransmitted packet task belongs to the ports respectively connected to the plurality of transmission paths at the transmitter;
the controller is further configured to send the to-be-retransmitted packet task to an agent corresponding to the target port of the to-be-retransmitted packet task; and
the agent is further configured to: generate a second packet corresponding to the received to-be-retransmitted packet task, and send the generated second packet to the receiver through a transmission path of a connected port.

16. The apparatus according to any one of claims 13 to 15, wherein
the agent is further configured to: receive an information packet sent by the receiver, and send the information packet to the controller, wherein the information packet indicates the first packet that has been received by the receiver; and
the controller is further configured to determine, based on the information packet, whether the transmission task is completed.

17. A network apparatus, used in a receiver, wherein the apparatus comprises:
a controller, a plurality of agents connected to the controller, and a plurality of ports, wherein the plurality of agents are connected to the plurality of ports in one-to-one correspondence, and at least one of the plurality of ports separately establishes a transmission path with a transmitter via a plane network;
the agent is configured to receive at least one first packet sent by the transmitter, wherein the at least one first packet belongs to a same transmission task;
the agent is further configured to: when the first packet is not used to implement at-most-once semantics, perform a processing operation based on the first packet and extract transmission information of the first packet, wherein the transmission information indicates an identifier of the packet; or when the first packet is used to implement the at-most-once semantics, send the first packet to the controller; and
the controller is configured to: record the received transmission information, or perform a processing operation based on the received first packet and record the transmission information of the first packet.

18. The apparatus according to claim 17, wherein the apparatus further comprises:
a plurality of physical interfaces connected to the plurality of agents in one-to-one correspondence, wherein the plurality of physical interfaces are connected to the plurality of ports in one-to-one correspondence;
the physical interface is configured to: receive the first packet, and perform serial-to-parallel conversion on the first packet;
the physical interface is further configured to send the converted first packet to a connected agent; and
the agent is specifically configured to receive the converted first packet sent by the connected physical interface.

19. The apparatus according to claim 17 or 18, wherein
the agent is further configured to: receive a second packet sent by the transmitter, and send the second packet to the controller, wherein the second packet is used to implement at-most-once semantics; and
the controller is configured to: determine whether the second packet is a duplicate packet of any first packet; and when the second packet is not the duplicate packet of the any first packet, perform a processing operation based on the second packet and record transmission information of the second packet; or when the second packet is the duplicate packet of the any first packet, skip performing the processing operation based on the second packet.

20. The apparatus according to claim 19, wherein
the controller is further configured to: when the second packet is the duplicate packet of the any first packet, determine a first available port in the at least one port;
the controller is further configured to send response information of the second packet to an agent connected to the first available port; and
the agent is configured to: generate a response packet based on the response information, and send the response packet to the transmitter through a transmission path of a connected port.

21. The apparatus according to any one of claims 17 to 20, wherein
the controller is further configured to determine a second available port in the at least one port when determining that a sending condition is met;
the controller is further configured to send receiving status information to an agent connected to the second available port, wherein the receiving status information indicates a first packet that belongs to the transmission task and that has been received by the receiver; and
the agent is configured to: generate an information packet based on the receiving status information, and send the information packet to the transmitter through a transmission path of a connected port.

22. A packet transmission system, wherein the system comprises:
a transmitter and a receiver, wherein the transmitter comprises the network apparatus according to any one of claims 13 to 16, and the receiver comprises the network apparatus according to any one of claims 17 to 21.
